Europäisches Patentamt

European Patent Office

Office européen des brevets

(11) Publication number: **0 473 879 A1**

## EUROPEAN PATENT APPLICATION

(21) Application number: **91107508.3**

(22) Date of filing: **08.05.91**

(51) Int. Cl.⁵: **G11B 15/67**, G11B 5/56

(30) Priority: **05.09.90 US 577914**

(43) Date of publication of application:
**11.03.92 Bulletin 92/11**

(84) Designated Contracting States:
**DE FR GB IT SE**

(71) Applicant: **Archive Corporation**
**1650 Sunflower Avenue**
**Costa Mesa California 92626(US)**

(72) Inventor: **Scroop, Robert**
**13414 Appalachian Way**
**San Diego, California 92129(US)**
Inventor: **Stead, Charles**
**4202 Tolowa Street**
**San Diego, California 92117(US)**
Inventor: **Dawson, Terry**
7742 Parma Lane
**San Diego, California 92126(US)**
Inventor: **Kelly, James**
**14695 Tierra Bonita**
**Poway, California 92064(US)**
Inventor: **Sellke, Richard G.**
**6952 Gordon Court**
**La Mesa, California 92041(US)**
Inventor: **Nebolon, Joe**
**3517 Curlew Street**
**San Diego, California 92103(US)**
Inventor: **McGee, Jeff**
**12287 Brickellia Street**
**San Diego, California 92129(US)**

(74) Representative: **Baillie, Iain Cameron et al**
**c/o Ladas & Parry, Altheimer Eck 2**
**W-8000 München 2(DE)**

(54) Tape transport with multi-gap read/write head for utilization with leader block tape cartridge.

(57) An eight inch form factor tape transport (26) is mechanically compatible with the IBM 3480 leader block tape cartridge and is capable of reading and writing data in the IBM 3480 eighteen track recording format. The tape path (P) eliminates the requirement for an air bearing. A support mechanism permits independent head height adjustment and head azimuth adjustment. The drive electronics are miniaturized on LSI circuits carried on four PC boards (64-66-68-70) contained within the form factor.

FIG. 1

## Background of the Invention

The present invention relates to magnetic tape transports, and more particularly, to an improved multi-track tape drive for the storage and retrieval of digital data.

One magnetic tape cartridge particularly suited for storing digital data is defined in Proposed American National Standard (ANSI) X3B5/87-238. That tape cartridge contains a single reel of half-inch magnetic tape including a leader block for interfacing with an automatic threading system and is hereafter sometimes referred to as the "leader block tape cartridge." This particular cartridge is further illustrated and described in U.S. Patent Nos. 4,335,858; 4,334,656; 4,383,660 and 4,452,406.

A number of tape transports have been developed that utilize the aforementioned leader block tape cartridge. One example is the commercially available IBM (Trademark) 3480 tape transport. It has an eighteen-gap read/write head adapted for an eighteen track recording format. This tape drive is relatively expensive and is the size of a small filing cabinet. It uses a complicated air bearing to "float" the magnetic tape adjacent the head. A similar, although slightly smaller tape drive is the Model 4280 tape drive commercially available from StorageTek of Boulder, Colorado. In that drive, the cartridge, take-up hub and read/write head are located in a relatively small compartment, but the power supply, pneumatics and electronic circuitry require substantial additional cabinet space.

Cipher Data Products, Inc., manufactures a 3000i (Trademark) line of tape drives that utilize the 3480 tape cartridge, including drives that fit within the industry standard eight inch form factor. A four-gap read/write head is stepped up and down to select a one of a set of six track groups recorded in the multi-track serpentine recording (MSR) format. There are four data tracks per group. The leader block threading mechanism and tape path of this tape drive are disclosed in U.S. Patent No. 4,949,914 assigned to Cipher Data Products, Inc. While the 3000i tape drives are mechanically compatible with the 3480 leader block tape cartridge, they are not electronically compatible with the 3480 eighteen track recording format.

It would therefore be desirable to provide a low cost eight inch form factor tape drive capable of reading and writing data in the IBM 3480 eighteen track recording format. It could then be inserted into eight inch form factor receptacles provided in many mid-range computer systems.

See also U.S. Patent Nos. 4,334,656; 4,335,858; 4,399,936; and 4,608,614 assigned to IBM, U.S. Patent No. 4,679,747 assigned to Laser Magnetic Storage International Company, U.S. Patent No. 4,704,645 assigned to Cipher Data Products, Inc. and U.S. Patent No. 4,742,407 assigned to Aspen Peripherals for examples of transports that are mechanically compatible with the IBM 3480 leader block tape cartridge.

## Summary of the Invention

According to one aspect of the invention, there is provided a transport for a leader block tape cartridge, comprising: a generally rectangular frame sized to fit within an eight inch form factor including a front panel connected to a forward transverse end of the frame, the panel having a slot sized to receive the leader block tape cartridge therethrough; means for receiving and supporting the leader block tape cartridge within the frame when the cartridge is inserted through the slot; a supply reel motor mounted to the frame; first drive means connected to the supply reel motor and engageable with a supply reel inside the leader block tape cartridge for rotating the same; a take-up motor mounted to the frame; a take-up hub; second drive means connected to the take-up motor for rotating the take-up hub; a read/write head having eighteen gaps mounted to the frame between the take-up hub and the leader block tape cartridge when the cartridge is inserted in the frame; a plurality of tape guide rollers mounted to the frame and defining a tape path adjacent the read/write head; and tape threading means for extracting a leader block from the leader block tape cartridge, pulling the leader block along the tape path, and inserting the leader block into the take-up hub during a threading operation, and for extracting the leader block from the take-up hub, pulling the leader block along the tape path and inserting the leader block into the leader block tape cartridge during a rewinding operation.

The present invention may provide a tape transport fitting within the eight inch form factor which is mechanically compatible with the IBM 3480 leader block tape cartridge and which is capable of reading and writing data in the IBM 3480 eighteen track recording format.

Conveniently, the present invention provides an eight inch form factor tape transport which is mechanically compatible with the IBM 3480 leader block tape cartridge and which is capable of reading and writing data in the IBM 3480 eighteen track recording format. The tape path preferably eliminates the requirement for an air bearing. A support mechanism may permit independent head height adjustment and head azimuth adjustment. The drive electronics are preferably miniaturized on LSI circuits carried on four PC boards contained within the form factor.

## Brief Description of the Drawings

FIG. 1 is a top plan view of a tape transport embodying a preferred embodiment of the present invention.

FIG. 2 is a vertical sectional view taken along line 2-2 of Fig. 1.

FIG. 3 is an enlarged top plan view of the read/write head and tape guide roller assembly of the tape transport.

FIG. 4 is an enlarged diagrammatic view illustrating the construction of the read/write head adjustment mechanism of the tape transport.

Description of the Preferred Embodiment

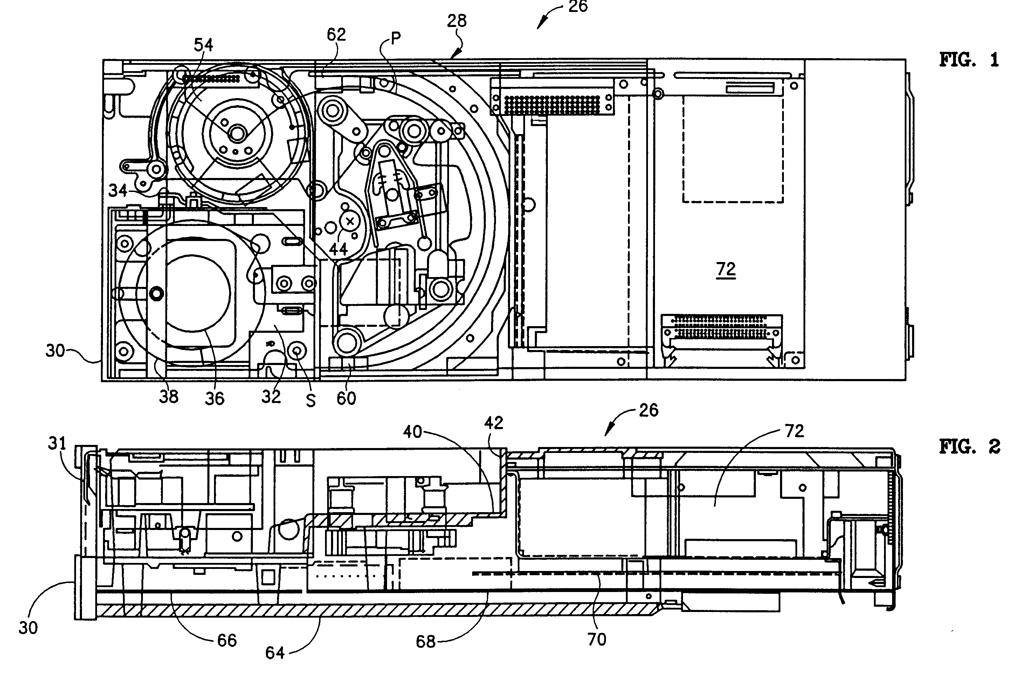

Referring to Figs. 1 and 2, a tape transport 26 constructed in accordance with the present invention has a rectangular frame 28 dimensioned to fit the computer industry standard eight inch form factor (width = 8.55 inches, height = 4.50 inches. The frame 28 has a front panel 30 connected to the forward transverse end thereof. The front panel has a slot or bezel closed by hinged dust door 31. This slot is sized for receiving therethrough a leader block tape cartridge (not illustrated). The cartridge is slid horizontally into a carriage 32 which thereafter swings downwardly via linkage 34 to engage the serrated supply reel hub (not illustrated) of the cartridge with a toothed drive chuck 36. The drive chuck is secured to the upper end of a vertical shaft of a first brushless DC motor 38 which is mounted to the frame 28 beneath the carriage 32.

A horizontal deck plate 40 is mounted to the frame 28 intermediate the length of the tape transport. An arcuate shaped wall 42 extends vertically upward from the periphery of the deck plate. A threader arm (not illustrated) has its inner end rigidly coupled to the upper end of a vertical drive shaft 44 which is rotated by motor (not illustrated) mounted to the tape transport frame. The threader arm has a threader pin for engaging the leader block of the tape cartridge and threading the same along a tape path in the manner set forth in the aforementioned U.S. Patent No. 4,949,914, the entire disclosure of which is specifically incorporated herein by reference. This tape path is illustrated in Fig. 1 by an arc labeled P.

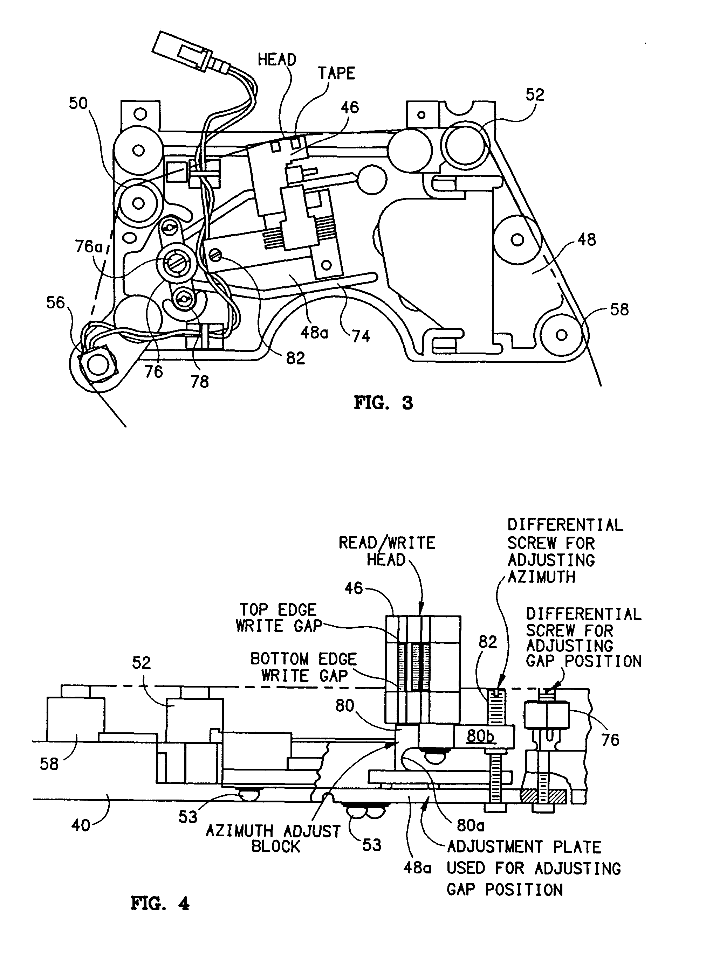

An eighteen gap read/write head or transducer 46 (Fig. 3) is mounted above a support plate 48 between a pair of tape guide rollers 50 and 52. The support plate is mounted to the deck plate 40 via screws 53 (Fig. 4) to position the read/write head 46 along the tape path between the cartridge and a take-up hub (not illustrated in Figs. 1 and 2).

The take-up hub (not illustrated) is mounted to the upper end of a vertical shaft of a second brushless DC motor 54 which is mounted to the frame. The take-up hub has a receptacle for receiving the leader block.

A third tape guide roller 56 (Fig. 3) is positioned along the tape path P adjacent the periphery of the take-up hub. A fourth tape guide roller 58 is positioned adjacent the supply hub and the right rear corner of the carriage 32. This coincides with the corner of the tape cartridge where the tape leader block seats. The need for complex air bearings to float the tape over the read/write head is eliminated along with the associated pneumatics.

The loading sequence of the tape transport of Figs. 1 and 2 is as follows. The outer end of the threader arm is initially located so that its threader pin is at the position marked with the S. The leader block cartridge is inserted into the tape drive and is received in carriage 32 so that the angled corner thereof with the leader block seated therein approaches the threader pin at location S. The height of the carriage is initially such that the narrower portion of the threader pin is received in the aperture in the leader block, while the enlarged portion is below the leader block. Continued pushing in of the cartridge results in full capture of the narrow upper portion of the threader pin into the aperture in the leader block. The carriage 32 is then lowered to capture an enlarged lower portion or shoulder of the threader pin into the enlarged portion of the aperture in the leader block.

During a threading operation of the tape drive, the threader arm is rotated counter-clockwise to pull the leader block, and the tape connected thereto around the tape guide rollers 58 and 52, past the read/write head 52, around the tape guide rollers 50 and 56 to the take-up hub. The threader arm then pulls the leader block into the receptacle in the take-up hub. The take-up hub can thereafter be rotated to wind the magnetic tape about the take-up hub, during which the leader block spins about the threader pin whose axis now coincides with the axis of rotation of the take-up hub.

The currents to motors 36 and 54 are controlled as is well known in the art to maintain the proper tension on the tape during writing and reading. See for example U.S. Patent No. 4,125,881 of Eige et al. entitled "Tape Motion Control for Reel-to-Reel Drive." A suitable tachometer assembly that may be used with each of the motors is disclosed in U.S. Patent No. 4,933,636 of Jeffrey S. McGee and entitled "Self-Aligning Tachometer and Method of Manufacturing Same". The oxide surface of the tape is held against the face of the read/write head 46 and against the guide rollers.

During a rewinding operation, all of the magnetic tape is unwound off of the take-up hub and the hub is stopped with its receptacle in the proper angular orientation to permit withdrawal of the leader block. The threader arm is then rotated clockwise to pull the leader block, and the tape connected thereto, out of the receptacle in the take-up hub, back around the guide rollers 56 and 50, past the read/write head 46, and then past the guide rollers 52 and 58. The leader block is then reinserted back into the corner of the tape cartridge.

First and second guide assemblies 60 and 62 (Fig. 1) are provided for engaging and guiding the leader block to insure proper insertion into the cartridge and into the take-up hub. These guide assemblies are the subject of U.S. Patent No. 4,852,825 of Jeffrey S. McGee and Thomas C. Kadien granted August 1, 1989 and entitled "Extraction and Insertion Mechanism for the Leader Block of a Tape Cartridge."

Referring to Fig. 2, a first PC board 64 providing all of the necessary control electronics is horizontally mounted within the frame 28. It extends adjacent a bottom of the frame and extends approximately three-quarters of the length thereof. A second PC board 66 providing the servo-circuitry is horizontally mounted within the frame 28 and is spaced slightly above the forward portion of the first PC board. Third and fourth PC boards 68 and 70 providing the read/write circuitry are horizontally mounted within the frame 28 spaced slightly above the rearward portion of the first PC board. All of the circuitry required to read and write data in the IBM 3480 recording format is provided on the aforementioned PC boards. Extensive utilization is made of LSI circuits to minimize board area so that all the boards can fit within the eight inch form factor. A power supply 72 occupies a rear portion of the frame 28. It provides electrical power to the PC boards and the supply and take-up motors.

The illustrated tape transport includes a support mechanism that permits independent head height adjustment and head azimuth adjustment. Referring to Fig. 3, a finger portion 48a of the support plate is defined by a C-shaped void or cut 74. The outermost end of this finger portion is connected to the remainder of the support plate by a differential screw 76. This differential screw is mounted via connecters 78. The head 76a of the differential screw may be turned with a screw driver to deflect the outermost end of the finger portion up and down relative to the remainder of the support plate. This is done during final assembly of the tape transport in order to correctly align the eighteen gaps of the read/write head 46 relative to the half-inch width of the magnetic tape pulled over the same.

The read/write 46 head is mounted to a C-shaped azimuth adjust block 80 (Fig. 4) having a flexure portion 80a. Another differential screw 82 extends through one leg 80b of the block 80. It may be turned during final assembly to minutely bend the block at the flexure portion 80a, thereby adjusting the azimuth angle of the head relative to the tape. This is very important in ensuring accurate writing and reading of data, and in ensuring interchangeability of tapes between drives.

The support plate 48 thus serves as a convenient module for carrying the read/write head, its adjustable mounting mechanism and the tape guide rollers. It may be readily removed, serviced and replaced.

Thus we have provided a tape transport that is mechanically capable of performing all the loading, threading, tensioning, winding, re-winding and unloading functions required for the IBM 3480 leader block tape cartridge within the front half of the eight inch form factor. This is due in part to the elimination of the air bearing used in previous tape drives capable of reading and writing data in the IBM 3480 recording format. The transport leaves the remaining half of the form factor available for the power supply and the PC boards that provide the read/write circuitry. Our transport also owes its compactness to the use of LSI circuitry to miniaturize the control and servo circuits so that that can be provided on PC boards adjacent the bottom of the main frame. The entire tape transport weights approximately twenty-five pounds.

While we have described a preferred embodiment of our 3480 compatible eight-inch form factor tape drive, it should be understood that modifications and adaptations thereof will occur to persons skilled in the art. Therefore, the protection afforded our invention should only be limited in accordance with the scope of the following claims.

## Claims

1. A transport for a leader block tape cartridge, comprising:

a generally rectangular frame sized to fit within an eight inch form factor including a front panel connected to a forward transverse end of the frame, the panel having a slot sized to receive the leader block tape cartridge therethrough;

means for receiving and supporting the leader block tape cartridge within the frame when the cartridge is inserted through the slot;

a supply reel motor mounted to the frame;

first drive means connected to the supply reel motor and engageable with a supply reel inside the leader block tape cartridge for rotating the same;

a take-up motor mounted to the frame;

a take-up hub;

second drive means connected to the take-up motor for rotating the take-up hub;

a read/write head having eighteen gaps mounted to the frame between the take-up hub and the leader block tape cartridge when the cartridge is inserted in the frame;

a plurality of tape guide rollers mounted to the frame and defining a tape path adjacent the read/write head; and

tape threading means for extracting a leader block from the leader block tape cartridge, pulling the leader block along the tape path, and inserting the leader block into the take-up hub during a threading operation, and for extracting the leader block from the take-up hub, pulling the leader block along the tape path and inserting the leader block into the leader block tape cartridge during a rewinding operation.

2. A transport according to Claim 1 and further comprising a plurality of PC boards mounted within the frame for carrying the control, servo and read/write circuitry required to read and write data recorded in the IBM 3480 recording format.

3. A transport according to Claims 1 or 2 and further comprising means mounted to the frame for permitting a height and an azimuth of the head to be independently adjusted.

4. A transport according to Claim 3 wherein the height and azimuth adjusting means includes a support plate having a finger portion capable of deflection, and a differential screw connected for deflecting the finger portion.

5. A transport according to Claim 1 wherein the height and azimuth adjusting means includes an azimuth adjust block for carrying the read/write head and a differential screw extending through a leg of the block for bending the block at a flexure portion thereof.

6. A transport according to Claim 5 and further comprising a power supply mounted in a rear portion of the frame for providing power to the control, servo and read/write circuitry and the motors.

7. A transport according to any one of the preceding claims and further comprising a pair of guide assemblies mounted to the frame for facilitating insertion of the leader block into the take-up hub and re-insertion of the leader block into the cartridge.

8. A transport according to Claim 3 and further comprising a support plate removeably mounted to the frame for carrying the head adjusting means and the tape guide rollers.

9. A transport according to any one of the preceding claims and further comprising a first PC board providing all of the required control electronics mounted horizontally within the frame adjacent a bottom thereof.

10. A transport according to Claim 9 and further comprising second and third PC boards mounted horizontally within the frame, spaced above a rear portion of the first PC board providing the read/write circuitry required to read and write digital data in the IBM 3480 recording format.

FIG. 1

FIG. 2

EP 0 473 879 A1

FIG. 3

FIG. 4

European
Patent Office

EUROPEAN SEARCH
REPORT

Application Number

EP 91 10 7508

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 852 825 (J.S. McGEE et al.)<br>* Column 1, lines 6-10,45-47; column 2, line 67 - column 3, line 39; column 4, line 31 - column 5, line 27; abstract; figure 4; claims 1,4 * | 1,7 | G 11 B 15/67<br>G 11 B 5/56 |
| X | EP-A-0 129 654 (IBM CORP.)<br>* Abstract; page 2, lines 2-29; page 4, lines 4-13,28-30; page 5, lines 8-18; claim 1; figure 2<br>* & US-A-4 608 614 (Cat. D) | 1 | |
| Y | | 5-6 | |
| Y | US-A-4 340 919 (T. KATO)<br>* Abstract; claims 1-2 * | 5 | |
| A | | 4 | |
| P,Y | GB-A-2 236 890 (QUALSTAR CORP.)<br>* Page 9, lines 28-30; page 12, lines 26-30; figures 4-5 * | 6 | |
| P,A | | 9,10 | |
| D,Y | US-A-4 679 747 (J.A. SMITH)<br>* Abstract; column 2, line 67 - column 3, line 3; column 5, lines 51-58; column 6, lines 29-34; figure 1 * | 1 | TECHNICAL FIELDS SEARCHED (Int. Cl.5) |
| Y | EP-A-0 367 593 (LASER MAGNETIC STORAGE INTERNATIONAL INC.)<br>* Abstract; column 5, lines 8-16; column 15, line 10 - column 16, line 51; claims 1-9,85,148,150; figures 15-19 * | 1 | G 11 B |
| D,A | US-A-4 742 407 (D.E. SMITH et al.)<br>* Column 2, lines 44-60; claim 1; figures 1,3 * | 1 | |
| A | US-A-3 372 884 (S. NAGANO)<br>* Column 1, lines 11-18; column 2, lines 2-7,38-41; claims 1-2; figure 1 * | 1 | |

–/–

The present search report has been drawn up for all claims

| Place of search | Date of completion of search | Examiner |
|---|---|---|
| The Hague | 05 November 91 | SALVADOR D.F. |

European
Patent Office

EUROPEAN SEARCH
REPORT

Application Number

**EP 91 10 7508**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 550 352  (T. NAKAO)<br>* Whole document *<br>– – – | 5 | |
| A | GB-A-2 199 440  (B. CATTLIN)<br>* Abstract; figure 1 *<br>– – – | 4,5 | |
| A | US-A-4 763 211  (K. YAMAMOTO et al.)<br>* Column 2, lines 50-62; claim 1; figures 2,4 *<br>– – – – – | 9 | |
| | | | **TECHNICAL FIELDS SEARCHED (Int. Cl.5)** |

The present search report has been drawn up for all claims

| Place of search | Date of completion of search | Examiner |
|---|---|---|
| The Hague | 05 November 91 | SALVADOR D.F. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

 

& : member of the same patent family, corresponding
    document